# FASCICULE DE BREVET EUROPEEN

(11) **EP 1 174 612 B1**
(45) Date de publication et mention de la délivrance du brevet: **22.09.2004**
(21) Numéro de dépôt: 01401930.1
(22) Date de dépôt: 19.07.2001
(51) Int. Cl.: F02D 41/40, F02D 41/02, F01N 3/023, F01N 3/027

(54) **Procédé d'injection de carburant**
Vorrichtung zur Kraftstoffseinspritzung
Method to inject fuel

(30) Priorité: 21.07.2000 FR 0009578
(43) Date de publication de la demande: 23.01.2002
(73) Titulaire: Renault s.a.s., 92100 Boulogne Billancourt (FR)
(72) Inventeur: Chaumeaux, Romuald, 91290 Arpajon (FR); Maignan, Dominique, 91540 Fontenay le Vicomte (FR); Thuault, Benoît, 91510 Lardy (FR)

(56) Documents cités:
- EP-A- 0 598 917
- EP-A- 0 844 380
- EP-A- 0 903 481
- DE-A- 19 746 855

## Description

L'invention concerne un procédé d'injection de carburant dans au moins un cylindre d'un moteur à combustion.

L'invention concerne plus particulièrement un procédé d'injection de carburant dans au moins un cylindre d'un moteur à combustion, notamment un moteur diesel ou à essence à mélange pauvre, pour régénérer un système de traitement des gaz d'échappement tel qu'un filtre à particules par combustion des particules stockées dans le filtre ou un piège à oxydes d'azote.

Les moteurs diesels et certains moteurs à essence émettent des substances polluantes telles que des particules et des oxydes d'azote.

On connaît des systèmes de traitement des gaz d'échappement qui permettent de diminuer les émissions de ces substances polluantes.

En particulier une méthode consiste à les filtrer à l'aide d'un filtre appelé filtre à particules ou les piéger dans un piège à oxydes d'azote. Ces derniers se colmatent et il est donc nécessaire de le régénérer périodiquement.

Pour provoquer, par exemple, la combustion des particules, il faut les porter à leur température de combustion qui est d'environ 550°C. Cependant, les gaz d'échappement des moteurs diesels atteignent rarement cette température puisque, par exemple en ville, la température des gaz d'échappement évolue entre 150 et 250 °C. Il faut alors augmenter spécifiquement la température des gaz d'échappement, lors de la phase de régénération du système de traitement des gaz d'échappement, de façon qu'ils atteignent la température de combustion des particules dans le filtre à particules.

Différents systèmes ont été proposés.

Des systèmes de chauffage par résistance électrique, notamment par des grilles chauffantes, permettent de porter la température des gaz d'échappement à une valeur suffisante pour provoquer la combustion des particules dans le filtre. Cependant, ces systèmes nécessitent une puissance électrique importante qu'il n'est pas toujours possible de fournir. De plus, ils compliquent la conception de la ligne d'échappement.

D'autres systèmes proposent d'augmenter la température des gaz échappement par l'injection d'une quantité supplémentaire de carburant dans au moins une des chambres de combustion sous la forme d'une post-injection ou d'une injection principale retardée. Une partie de cette quantité de carburant additionnelle s'enflamme en produisant essentiellement une augmentation de la température des gaz d'échappement, le reste de cette quantité étant transformé en produits d'oxydation partielle comme le monoxyde de carbone CO et les hydrocarbures HC.

L'augmentation de la température des gaz d'échappement est provoquée par la combustion tardive de la quantité supplémentaire de carburant, qui fournit de l'énergie mécanique supplémentaire au moteur, en plus de la chaleur dégagée par la combustion.

L'augmentation de la température peut aussi être provoquée par l'oxydation des hydrocarbures HC supplémentaires et du monoxyde de carbone CO au cours d'une réaction exothermique dans un catalyseur d'oxydation situé dans la ligne d'échappement, en amont du système de traitement des gaz d'échappement.

De tels systèmes nécessitent que le moteur fournisse un couple positif, c'est-à-dire une traction ou une propulsion du véhicule. Or ce n'est pas toujours le cas.

Lorsque le véhicule évolue dans un environnement, notamment urbain, le moteur fonctionne selon un cycle constitué d'une succession de phase d'accélération dans lesquelles le moteur doit fournir un couple positif, et de décélération dans lesquels le moteur doit fournir un couple négatif appelé frein moteur.

Lors des phases de décélération, l'injection du carburant dans les chambres de combustion est coupée. Il est donc impossible de maintenir ou d'augmenter la température des gaz échappement au cours de ces phases. L'efficacité du système de traitement est alors réduite.

Dans le but de remédier à ces inconvénients, l'invention propose un procédé d'injection de carburant dans au moins un cylindre d'un moteur à combustion, notamment d'un moteur diesel caractérisé en ce que lors d'une phase de régénération d'un système de traitement des gaz d'échappement et lors d'une phase de frein moteur, une quantité prédéterminée de carburant est injectée dans le cylindre après la compression des gaz dans le cylindre, et en ce qu'au moins une partie de la quantité prédéterminée de carburant est brûlée dans un catalyseur d'oxydation interposé entre le moteur à combustion et le système de traitement des gaz d'échappement de façon à maintenir ou à augmenter la température des gaz d'échappement en aval du catalyseur d'oxydation.

Selon d'autres caractéristiques de l'invention :
- la détermination de la quantité prédéterminée de carburant injectée dépend au moins partiellement du point de fonctionnement du moteur ;
- la détermination de la quantité prédéterminée de carburant injectée dépend au moins partiellement des caractéristiques du catalyseur d'oxydation ;
- la détermination de la quantité prédéterminée de carburant injectée dépend au moins partiellement de la température du catalyseur d'oxydation lors de la combustion de la quantité prédéterminée ;
- la détermination de la quantité prédéterminé de carburant injectée dépend au moins partiellement du rendement thermique du catalyseur d'oxydation ;
- le début de l'injection de la quantité prédéterminée de carburant est déphasé d'au moins 30 degrés d'angle de rotation du vilebrequin après le passage du piston au point mort haut ;
- la fin de l'injection de la quantité prédéterminée de carburant est réalisée avant la fermeture de la dernière soupape d'échappement du cylindre ;
- lors de la phase de régénération, on active des moyens additionnels de chauffage, tels qu'une résistance électrique de chauffage, pour chauffer le catalyseur d'oxydation, lorsque sa température est insuffisante pour brûler au moins partiellement la quantité de carburant prédéterminée ;
- le système de traitement des gaz d'échappement comporte un filtre à particules ;
- le système de traitement des gaz d'échappement comporte un piège à oxydes d'azote.

D'autres caractéristiques et avantages de l'invention apparaîtront à la lecture de la description détaillée qui suit pour la compréhension de laquelle on se reportera aux dessins annexés parmi lesquels :
- la figure 1 représente schématiquement une ligne d'échappement d'un moteur à combustion équipée d'un catalyseur et d'un filtre à particules ;
- la figure 2 est un diagramme qui représente la quantité de carburant injectée en fonction de l'angle du vilebrequin par rapport au point mort haut du piston, selon les enseignements de l'invention.

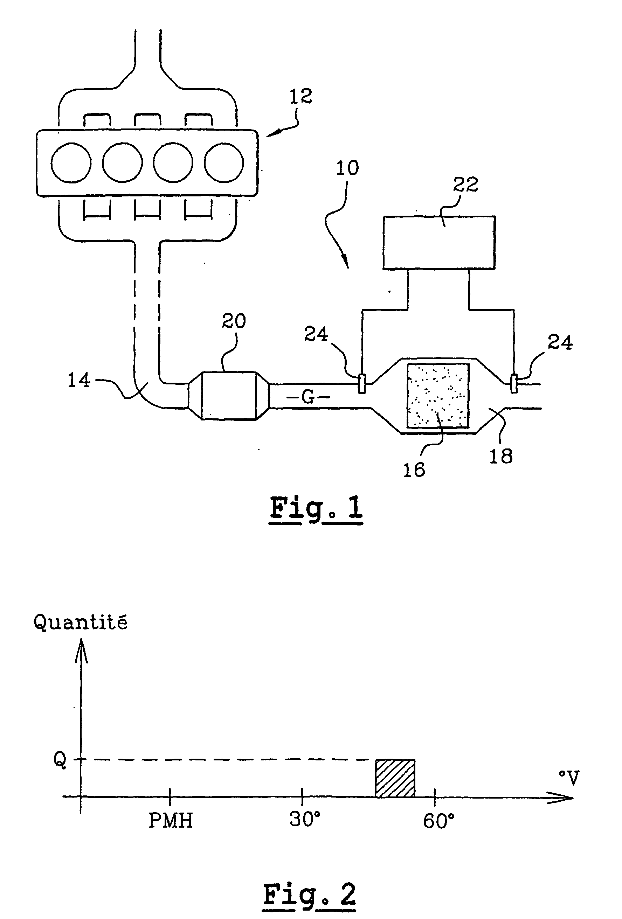

On a représenté sur la figure 1, un système de traitement 10 des gaz d'échappement G d'un moteur à combustion 12. Le moteur 12 est un moteur diesel ou un moteur à essence fonctionnant en mélange pauvre tel qu'un moteur à essence à injection directe.

Une ligne 14 d'échappement permet l'évacuation des gaz G du moteur vers l'atmosphère. Un système de traitement destiné à purifier les gaz d'échappement G est interposé dans la ligne 14. Il se compose principalement d'un système de traitement 16 agencé dans une chambre 18.

Le système de traitement 16 peut être par exemple un filtre à particules et/ou un piège à oxydes d'azote.

Dans la suite de la description le système de traitement 16 sera, à titre d'exemple un filtre à particules.

Un catalyseur d'oxydation 20 est inséré dans la ligne 14 d'échappement en amont du système de traitement 16.

Le système de traitement 16 est de préférence situé à proximité immédiate en aval du catalyseur d'oxydation 20 de façon à minimiser les pertes thermiques des gaz d'échappement G entre ces deux éléments pour favoriser la montée ou le maintien en température du système de traitement 16.

Avantageusement, le système de traitement 16 peut être recouvert d'une imprégnation catalytique.

Le système de traitement 16 se présente avec une face d'entrée et une face de sortie des gaz G. Il est composé par exemple de canaux alternativement bouchés et ouverts en entrée et qui sont inversement ouverts et bouchés en sortie. Les parois du système de traitement 16 sont poreuses.

L'injection du carburant dans le moteur 12 est commandée par un système électronique de commande 22 qui permet de gérer la loi d'injection de carburant dans les chambres de combustion du moteur.

Des moyens de mesure 24, tels que des capteurs de pression et des capteurs de température, sont disposés sur la ligne d'échappement et sont reliés au système électronique de commande 22.

Le fonctionnement du système de traitement 10 selon l'état de la technique est le suivant.

Les gaz d'échappement G produits par le moteur 12 sont envoyés dans la ligne 14.

Lors de leur passage dans la chambre 18 les particules contenues dans les gaz G sont arrêtées par le système de traitement 16.

Périodiquement les particules ainsi piégées dans le système de traitement 16 sont brûlées au cours d'une phase de régénération.

Les moyens de mesure 24 transmettent au système électronique de commande 22 des informations représentatives du niveau de chargement du système de traitement 16.

Le système électronique de commande 22 prend en compte, par exemple, le niveau de chargement du filtre à particules, ainsi que le point de fonctionnement du moteur, pour déclencher la phase de régénération.

La régénération du système de traitement 16 nécessite d'atteindre une température des gaz d'échappement supérieure ou égale à la température de combustion des particules, c'est-à-dire d'environ 550°C. Il faut donc, dans certains cas, diminuer la température de combustion des particules pour favoriser la phase de régénération, ou augmenter la température des gaz d'échappement.

Plusieurs solutions peuvent être mises en oeuvre de façon indépendante ou concomitante.

L'ajout dans le carburant d'un additif chimique particulier permet d'augmenter les cinétiques de combustion des particules, et par conséquent d'abaisser leur température de combustion sur le filtre à particules.

Le système de traitement 16 peut être recouvert d'une imprégnation particulière appelée phase catalytique qui permet d'abaisser la température de combustion des particules. À titre d'exemple, on peut envisager l'utilisation d'un catalyseur métallique supporté par le filtre.

De plus, le catalyseur 20 situé en amont du système de traitement 16 permet de convertir les hydrocarbures imbrûlés HC et le monoxyde de carbone CO en dioxyde de carbone CO₂ par oxydation avec l'oxygène. La réaction d'oxydation est exothermique, ce qui participe à l'augmentation de la température des gaz d'échappement G.

D'autres solutions sont mises en oeuvre ponctuellement, lorsque la température des gaz d'échappement G en amont du système de traitement 16 est inférieure à la température de combustion des particules, et lorsque le système de traitement 16 doit être régénéré. Il s'agit des procédés tels que des procédés de postinjection ou d'injection retardée qui sont utilisés pour chauffer les gaz d'échappement lorsque le moteur doit fournir un couple positif.

Cependant, ces procédés ne peuvent être utilisés lorsque le véhicule est dans une phase de décélération et que le moteur doit fournir un couple négatif résistant, ou frein moteur, de façon à ralentir le véhicule.

L'invention propose, lors d'une phase de régénération du système de traitement 16 et lors d'une phase de décélération du véhicule qui nécessite du frein moteur, d'injecter une quantité de carburant prédéterminée Q dans au moins un cylindre après la compression des gaz dans le cylindre.

Ainsi, la quantité de carburant prédéterminée Q n'est pas brûlée à l'intérieur de la chambre de combustion et une provoque pas d'augmentation du couple moteur. La quantité de carburant prédéterminée Q est évacuée du cylindre avec les gaz d'échappement G vers le catalyseur d'oxydation 20.

La quantité de carburant prédéterminée Q est alors brûlée, au moins partiellement, dans le catalyseur d'oxydation 20, lorsque la valeur de sa température est supérieure à une valeur prédéterminée.

La valeur prédéterminée peut être de l'ordre de 250 °C.

Lors d'une phase de régénération du système de traitement 16 et lorsque la température du catalyseur d'oxydation 20 est inférieure à la valeur prédéterminée, on peut activer des moyens additionnels de chauffage, tels qu'une résistance électrique de chauffage qui peut être dans le catalyseur d'oxydation lui-même, pour le chauffer.

De manière générale, le début de injection de la quantité prédéterminée Q de carburant est déphasée d'au moins 30 degrés d'angle de rotation du vilebrequin après le passage du piston au point mort haut PMH. La fin de l'injection de la quantité prédéterminée Q de carburant doit être réalisée avant la fermeture de la dernière soupape d'échappement du cylindre correspondant.

Conformément à la figure 2, la quantité prédéterminée Q de carburant est injectée dans le cylindre de préférence lorsque l'angle de rotation du vilebrequin est déphasée de 30 à 60 degrés par rapport au point mort haut PMH.

De façon à provoquer une élévation de température des gaz d'échappement G à la sortie du catalyseur d'oxydation 20, la quantité supplémentaire Q de carburant peut être de l'ordre de 5 à 15 mm³ à chaque cycle du moteur 12.

Elle est déterminée en fonction de plusieurs paramètres tels que le point de fonctionnement du moteur et/ou les caractéristiques du catalyseur d'oxydation 20.

Le rendement thermique du catalyseur d'oxydation 20 permet de déterminer la quantité supplémentaire Q de carburant à injecter pour obtenir le maintien ou l'augmentation de la température des gaz d'échappement G, à l'entrée système de traitement 16, nécessaire à sa régénération.

La température du catalyseur d'oxydation 20 peut aussi être prise en compte pour la détermination de la quantité supplémentaire Q de carburant. En effet, le rendement thermique du catalyseur 20 dépend de sa température. C'est-à-dire qu'il atteint son rendement maximum que lorsque sa température est par exemple supérieure à 250°C.

Le procédé d'injection selon l'invention permet d'augmenter uniquement la température des gaz d'échappement G par une réaction exothermique de la quantité supplémentaire Q de carburant.

## Revendications

1. Procédé d'injection de carburant dans au moins un cylindre d'un moteur à combustion (12), notamment d'un moteur diesel **caractérisé en ce que** lors d'une phase de régénération d'un système de traitement (16) des gaz d'échappement (G) et lors d'une phase de frein moteur, une quantité prédéterminée (Q) de carburant est injectée dans le cylindre après la compression des gaz (G) dans le cylindre, et **en ce qu'**au moins une partie de la quantité prédéterminée (Q) de carburant est brûlée dans un catalyseur d'oxydation (20) interposé entre le moteur à combustion et le système de traitement (16) des gaz d'échappement (G) de façon à maintenir ou à augmenter la température des gaz d'échappement (G) en aval du catalyseur d'oxydation (20).

2. Procédé d'injection selon la revendication précédente, **caractérisé en ce que** la détermination de la quantité prédéterminée (Q) de carburant injectée dépend au moins partiellement du point de fonctionnement du moteur (12).

3. Procédé d'injection selon l'une des revendications 1 ou 2, **caractérisé en ce que** la détermination de la quantité prédéterminée (Q) de carburant injectée dépend au moins partiellement des caractéristiques du catalyseur d'oxydation (20).

4. Procédé d'injection selon la revendication précédente, **caractérisé en ce que** la détermination de la quantité prédéterminée (Q) de carburant injectée dépend au moins partiellement de la température du catalyseur d'oxydation (20) lors de la combustion de la quantité prédéterminée (Q).

5. Procédé d'injection selon l'une des revendications 3 ou 4, **caractérisé en ce que** la détermination de la quantité prédéterminé (Q) de carburant injectée dépend au moins partiellement du rendement thermique du catalyseur d'oxydation (20).

6. Procédé d'injection selon l'une quelconque des revendications précédentes, **caractérisé en ce que** le début de l'injection de la quantité prédéterminée (Q) de carburant est déphasé d'au moins 30 degrés d'angle de rotation du vilebrequin après le passage du piston au point mort haut (PMH).

7. Procédé d'injection selon l'une quelconque des revendications précédentes, **caractérisé en ce que** la fin de l'injection de la quantité prédéterminée (Q) de carburant est réalisée avant la fermeture de la dernière soupape d'échappement du cylindre.

8. Procédé d'injection selon l'une quelconque des revendications précédentes, **caractérisé en ce que** lors de la phase de régénération, on active des moyens additionnels de chauffage, tels qu'une résistance électrique de chauffage, pour chauffer le catalyseur d'oxydation (20), lorsque sa température est insuffisante pour brûler au moins partiellement la quantité de carburant prédéterminée (Q).

9. Procédé d'injection selon l'une quelconque des revendications précédentes, **caractérisé en ce que** le système de traitement (16) des gaz d'échappement (G) comporte un filtre à particules.

10. Procédé d'injection selon l'une quelconque des revendications précédentes, **caractérisé en ce que** le système de traitement (16) des gaz d'échappement (G) comporte un piège à oxydes d'azote.

## Patentansprüche

1. Verfahren zur Einspritzung von Kraftstoff in mindestens einen Zylinder eines Verbrennungsmotors (12), insbesondere eines Dieselmotors, **dadurch gekennzeichnet, dass** während einer Regenerationsphase eines Systems (16) zur Behandlung von Abgasen (G) und während einer Motorbremsphase eine vorbestimmte Menge (Q) an Kraftstoff in den Zylinder nach der Kompression der Gase (G) im Zylinder eingespritzt wird, und dadurch, dass mindestens ein Teil der vorbestimmten Menge (G) an Kraftstoff in einem Oxidationskatalysator (20) verbrannt wird, der zwischen dem Verbrennungsmotor und dem System zur Behandlung (16) der Abgase (G) angeordnet ist, so dass die Temperatur der Abgase (G) vor dem Oxidationskatalysator (20) gehalten oder erhöht wird.

2. Verfahren zur Einspritzung nach dem vorhergehenden Anspruch, **dadurch gekennzeichnet, dass** die Bestimmung der vorbestimmten Menge (Q) an eingespritztem Kraftstoff zumindest teilweise vom Betriebspunkt des Motors (12) abhängt.

3. Verfahren zur Einspritzung nach einem der Ansprüche 1 oder 2, **dadurch gekennzeichnet, dass** die Bestimmung der vorbestimmten Menge (Q) an eingespritztem Kraftstoff zumindest teilweise von den Eigenschaften des Oxidationskatalysators (20) abhängt.

4. Verfahren zur Einspritzung nach dem vorhergehenden Anspruch, **dadurch gekennzeichnet, dass** die Bestimmung der vorbestimmten Menge (Q) an eingespritztem Kraftstoff zumindest teilweise von der Temperatur des Oxidationskatalysators (20) bei der Verbrennung der vorbestimmten Menge (Q) abhängt.

5. Verfahren zur Einspritzung nach einem der Ansprüche 3 oder 4, **dadurch gekennzeichnet, dass** die Bestimmung der vorbestimmten Menge (Q) an eingespritztem Kraftstoff zumindest teilweise vom thermischen Wirkungsgrad des Oxidationskatalysators (20) abhängt.

6. Verfahren nach irgend einem der vorhergehenden Ansprüche, **dadurch gekennzeichnet, dass** der Beginn der Einspritzung der vorbestimmten Menge (Q) an Kraftstoff um mindestens 30 Grad des Rotationswinkels der Kurbelwelle nach dem Durchgang des Kolbens am oberen Totpunkt (PMH) verschoben ist.

7. Verfahren nach irgend einem der vorhergehenden Ansprüche, **dadurch gekennzeichnet, dass** das Ende der Einspritzung der vorbestimmten Menge (Q) an Kraftstoff vor dem Schließen des letzten Abgasventils des Zylinders realisiert wird.

8. Verfahren nach irgend einem der vorhergehenden Ansprüche, **dadurch gekennzeichnet, dass** man während der Regenerationsphase zusätzliche Mittel zur Erhitzung aktiviert, wie etwa einen elektrischen Heizwiderstand, um den Oxidationskatalysator (20) zu erhitzen, wenn seine Temperatur nicht ausreicht, um die vorbestimmte Menge (Q) an Kraftstoff zumindest teilweise zu verbrennen.

9. Verfahren nach irgend einem der vorhergehenden Ansprüche, **dadurch gekennzeichnet, dass** das System (16) zur Behandlung der Abgase (G) einen Partikelfilter umfasst.

10. Verfahren nach irgend einem der vorhergehenden Ansprüche, **dadurch gekennzeichnet, dass** das System (16) zur Behandlung der Abgase (G) eine Stickoxydfalle umfasst.

## Claims

1. A method of injection of fuel into at least one cylinder of a combustion engine (12), in particular a diesel engine, **characterised in that** during a regeneration phase of a processing system (16) for the exhaust gases (G) and during a phase of engine braking, a predetermined quantity (Q) of fuel is injected into the cylinder after the compression of the gases (G) in the cylinder, and **in that** at least part of the predetermined quantity (Q) of fuel is combusted in an oxidation catalyst (20) interposed between the combustion engine and the processing system (16) for the exhaust gases (G) in order to maintain or increase the temperature of the exhaust gases (G) downstream of the oxidation catalyst (20).

2. A method of injection as claimed in the preceding claim, **characterised in that** the calculation of the predetermined quantity (Q) of fuel injected depends at least partially on the operation point of the engine (12).

3. A method of injection as claimed in one of claims 1 or 2, **characterised in that** the calculation of the predetermined quantity (Q) of fuel injected depends at least partially on the characteristics of the oxidation catalyst (20).

4. A method of injection as claimed in the preceding claim, **characterised in that** the calculation of the predetermined quantity (Q) of fuel injected depends at least partially on the temperature of the oxidation catalyst (20) at the time of combustion of the predetermined quantity (Q).

5. A method of injection as claimed in one of claims 3 or 4, **characterised in that** the calculation of the predetermined quantity (Q) of fuel injected depends at least partially on the thermal yield of the oxidation catalyst (20).

6. A method of injection as claimed in any one of the preceding claims, **characterised in that** the beginning of the injection of the predetermined quantity (Q) of fuel is phase-shifted by at least 30 degrees of angle of rotation of the crankshaft after the transition of the piston to the top dead centre (TDC).

7. A method of injection as claimed in any one of the preceding claims, **characterised in that** the end of the injection of the predetermined quantity (Q) of fuel takes place prior to the closure of the last exhaust valve of the cylinder.

8. A method of injection as claimed in any one of the preceding claims, **characterised in that** during the regeneration phase, additional heating means are actuated, such as an electrical heating resistance, in order to heat the oxidation catalyst (20) when its temperature is not enough at least partially to combust the predetermined quantity (Q) of fuel.

9. A method of injection as claimed in any one of the preceding claims, **characterised in that** the processing system (16) for the exhaust gases (G) comprises a particle filter.

10. A method of injection as claimed in any one of the preceding claims, **characterised in that** the processing system (16) for the exhaust gases (G) comprises a nitrogen oxide trap.
